# EUROPÄISCHE PATENTSCHRIFT

(11) **EP 3 938 696 B1**
(45) Veröffentlichungstag und Bekanntmachung des Hinweises auf die Patenterteilung: **18.10.2023**
(21) Anmeldenummer: 20706417.1
(22) Anmeldetag: 13.02.2020
(51) Int. Cl.: F16N 11/08

(54) **SCHMIERSTOFFSPENDER**
LUBRICANT DISPENSER
DISTRIBUTEUR DE LUBRIFIANT

(30) Priorität: 15.03.2019 DE 102019106692
(43) Veröffentlichungstag der Anmeldung: 19.01.2022
(73) Patentinhaber: Perma-Tec GmbH & Co. KG, 97717 Euerdorf (DE)
(72) Erfinder: EISENBACHER, Egon, 97753 Karlstadt (DE); BÜHNER, Kuno, 97772 Oberbach (DE); ENGELHARDT, Ralf, 97424 Schweinfurt (DE); LEHNERT, Jochen, 97618 Niederlauer (DE); HAUPT, Thomas, 97705 Burkardroth (DE)
(74) Vertreter: Andrejewski - Honke Patent- und Rechtsanwälte Partnerschaft mbB
(86) Internationale Anmeldenummer: PCT/EP2020/053750
(87) Internationale Veröffentlichungsnummer: WO 2020/187500

(56) Entgegenhaltungen:
- EP-A2- 1 104 867
- WO-A1-2009/143975
- WO-A2-2014/076319
- DE-U1-202007 012 372

## Beschreibung

Die Erfindung betrifft einen Schmierstoffspender mit einem mit Schmierstoff gefüllten Vorratsbehälter und einer an den Vorratsbehälter als separate, austauschbare Baueinheit lösbar angeschlossenen Fördereinheit (die auch als Antriebseinheit oder Antriebskopf bezeichnet wird), mit der Schmierstoff aus dem Vorratsbehälter zu einem Auslass der Fördereinheit förderbar ist und die mit einer elektronischen Steuereinrichtung ausgerüstet ist.

Derartige Schmierstoffspender werden beispielsweise zur automatisierten Schmierung von Maschinen- oder Anlagenteilen, wie z. B. Wälz- und Gleitlagern, Linearführungen, Ketten oder dergleichen eingesetzt. Die Schmierstoffspender sind beispielsweise mit einer Schmierstelle (Z. B. eines Lagers) verbunden und können Schmierstoffe in Abhängigkeit von der Laufzeit einer Maschine oder in vorgegebenen Intervallen abgeben. Als Schmierstoff kommen z. B. Fette oder Öle zum Einsatz. Der Vorratsbehälter wird auch als Kartusche bezeichnet und eine solche Kartusche lässt sich lösbar und austauschbar mit der Fördereinheit zu einer Baueinheit verbinden, z. B. durch eine Schraubverbindung, Steckverbindung, Rastverbindung, Bajonettverbindung oder dergleichen. Die Fördereinheit ist dazu mit einer über die Steuereinrichtung gesteuerten Fördereinrichtung, z. B. einer Pumpe oder dergleichen ausgerüstet, wobei mit der Steuereinrichtung verschiedene Parameter zum Betrieb auswählbar sind, z. B. Spendezeit, Spendeintervalle oder dergleichen. In der Regel ist in der Fördereinheit ein mit Hilfe des Antriebes auf- und abbewegbarer Stößel oder Kolben angeordnet, der zum Fördern des Schmierstoffs aus dem Vorratsbehälter zum Auslass mit Hilfe des von der Steuereinrichtung gesteuerten Antriebes zyklisch angehoben und abgesenkt und damit Schmierstoff aus dem Vorratsbehälter gesaugt und aus der Auslassöffnung herausgedrückt wird. Grundsätzlich kann ein solcher Schmierstoffspender als Einzelpunkt-Schmierstoffspender ausgebildet sein, bei welchem der Schmierstoffspender mit dem Auslass unmittelbar oder unter Zwischenschaltung einer Schlauchleitung mit der Schmierstelle verbunden wird. Alternativ wird der Schmierstoffspender jedoch als Mehrpunktschmierstoffspender eingesetzt, bei dem mehrere Auslassöffnungen vorhanden sind oder bevorzugt an die Auslassöffnung eine separate Verteileinrichtung angeschlossen ist, über die mit einem einzigen Schmierstoffspender eine Vielzahl von Schmierstellen an verschiedenen Orten über Schlauchleitungen versorgt werden. Derartige Einzel- und Mehrpunktschmiersysteme sind aus der Praxis in unterschiedlichsten Ausführungsformen bekannt.

Ein Schmierstoffspender der eingangs beschriebenen Art ist z. B. aus der DE 102 34 881 B4 oder die DE202007012372U bekannt. Der Vorratsbehälter wird mit der als Antriebskopf bezeichneten Fördereinheit verbunden, bei welcher über eine Stößelanordnung mit Steuerflächen eine Drehbewegung einer Steuerfläche in eine Hubbewegung des Stößels umgewandelt und dadurch Schmierstoff aus dem Vorratsbehälter zu dem Auslass am Stößelende gefördert wird. Innerhalb des Vorratsbehälters ist zusätzlich ein mit einer Gewindespindel verbundener Kolben angeordnet, über den der Schmierstoff aus dem Vorratsbehälter verdrängt und dem Schmierstoffdurchlasskanal der Antriebswelle zugeführt wird.

Eine weitere Ausführungsform eines Schmierstoffspenders ist aus der DE 298 18 084 U1 bekannt. Die Steuereinrichtung des Schmierstoffspenders weist einen über eine Eingangsschnittstelle mit einem Microcontroller verbundenen Wahlschalter für die Einstellung der Spendezeit auf. Ferner weist die Steuereinrichtung einen über eine Eingangsschnittstelle mit dem Microcontroller verbundenen Wahlschalter für die Einstellung der Kartuschengröße auf. Im Übrigen kann die Steuereinrichtung eine Vorrichtung zur automatischen Kartuschengrößenerkennung aufweisen.

In der WO 2010/026559 A1 wird die Möglichkeit einer drahtlosen Kommunikation eines Steuerrechners mit einer Vielzahl von Schmierstoffspendern beschrieben.

Aus der US 2011/0253481 A1 ist ein Schmierstoffspender mit der Möglichkeit einer Überwachung und mit einem Alarmsystem bekannt, wobei auch hier über einen Rechner eine Vielzahl von Schmierstoffspendern überwacht werden können.

Schmierstoffspender der eingangs beschriebenen Art haben sich in der Praxis hervorragend bewährt, sie sind jedoch weiterentwicklungsfähig. Dieses betrifft insbesondere die Betriebssicherheit und/oder die Einstell- sowie Auswertemöglichkeiten.

Im Übrigen wird in der US 2015/0266050 A1 eine Betätigungsvorrichtung für eine Fettkartusche beschrieben, bei welcher eine automatisierte Einstellung der Dosiermenge möglich sein soll. Dazu kann eine Identifizierung der Kartusche über einen Barcode, einen QR-Code oder über RFID erfolgen.

In der DE 103 47 176 B4 wird ein Fett-Handling-System beschrieben, bei dem eine Fettkartusche mit einer Füllstation verbunden wird. Die Fettkartusche weist einen Flansch auf, an dem ein auswechselbares Schild angebracht ist, auf dem die Materialbezeichnung für das Fett und eine Codenummer eingebracht sind. An der Rückseite des Flansches ist ein Stahlwinkel angeschraubt, der in eine bestimmte Position in Übereinstimmung mit der Codeziffer des Materials gesetzt werden kann. An der Füllstation sind Abfragesensoren angeordnet, wobei einer der Abfragesensoren die korrekte Zuordnung des Fettspeicherbehälters zur Fett-Dosiervorrichtung oder zur Behälterpumpe abfragt.

Schließlich kennt man aus dem Bereich der Kfz-Technik die Möglichkeit, eine Identifizierung von Flüssigkeitsbehältern im Zuge des Anschlusses des Flüssigkeitsbehälters an den Flüssigkeitskreislauf des Fahrzeugantriebes zu realisieren (vergleiche WO 2014/076319 A2).

Der Erfindung liegt die Aufgabe zugrunde, einen Schmierstoffspender der eingangs beschriebenen Art zu schaffen, der sich bei einfachem Aufbau durch eine erhöhte Betriebssicherheit und/oder Funktionalität auszeichnet.

Zur Lösung dieser Aufgabe lehrt die Erfindung bei einem gattungsgemäßen Schmierstoffspender der eingangs beschriebenen Art, dass der Vorratsbehälter mit einem elektronischen Codierungsmittel ausgerüstet ist, welches zur Identifizierung des Vorratsbehälters im montierten Zustand mit der elektronischen Steuereinrichtung der Fördereinheit zur Übertragung von Informationen verbindbar und von dieser auslesbar ist bzw. verbunden und ausgelesen wird.

Die Erfindung geht dabei von der Erkenntnis aus, dass Vorratsbehälter, die auch als Kartuschen bezeichnet werden, in der Regel in spezieller Bauweise für eine bestimmte Fördereinheit ausgelegt sind und hergestellt werden, so das Vorratsbehälter einerseits und Fördereinheit andererseits eine konstruktiv und funktionell aneinander angepasste Einheit in Modulbauweise bilden. Der Vorratsbehälter ist dabei in der Regel ein austauschbares Zubehörteil bzw. Ersatzteil, das in Einwegbauweise ein Verbrauchsmaterial darstellt, während die Fördereinheit als Antriebskopf wiederverwendbar ist. Während der Lebensdauer einer Fördereinheit eines solchen Schmierstoffspenders wird folglich der Vorratsbehälter als Verbrauchsmaterial mehrfach ausgetauscht. Um die Betriebssicherheit und eine einwandfreie Funktionalität zu gewährleisten, ist wichtig, dass die Kartusche bzw. der Vorratsbehälter möglichst luftfrei und mit einem geeigneten Schmierstoff gefüllt ist. Insofern ist darauf zu achten, dass die auszutauschende Kartusche (Vorratsbehälter) tatsächlich für die jeweilige Fördereinheit bestimmt ist. Dieses wird erfindungsgemäß durch das am Vorratsbehälter angeordnete elektronische Codierungsmittel erreicht, welches im Zuge des Aufsteckens der Kartusche auf die Fördereinheit automatisch mit der Fördereinheit kontaktiert und damit von der Steuereinrichtung der Fördereinheit auslesbar ist. Auf diese Weise kann die Steuereinrichtung der Fördereinheit den Vorratsbehälter einfach und eindeutig identifizieren. Damit besteht die Möglichkeit, den Betrieb der Fördereinheit nur dann zuzulassen, wenn eine für diese Fördereinheit vorgesehene, korrekt identifizierte Kartusche aufgesetzt ist bzw. den Betrieb (z. B. den Antrieb) zu unterbrechen, falls keine korrekte Identifizierung erfolgt ist. Dazu kann das elektronische Codierungsmittel zumindest eine Information, z. B. eine Kennung, speichern, die wiederum von der Fördereinheit auslesbar und dort als zulässige Kennung für einen Vergleich ebenfalls gespeichert ist. Zusätzlich besteht die Möglichkeit, über ein solches elektronisches Codierungsmittel eine weitere Funktionalität zur Verfügung zu stellen. So kann das Codierungsmittel, das z. B. als Patine ausgebildet ist oder eine Platine aufweist, einen Speicher aufweisen, in dem Informationen über den Vorratsbehälter, z. B. über den Behältertyp und/oder die Behältergröße und/oder den Schmierstoff bzw. Schmierstofftyp und/oder die entnommene Schmierstoffmenge und/oder den Füllstand oder das Restvolumen gespeichert oder speicherbar sind. Es können auch zeitliche Informationen gespeichert sein, z. B. der Zeitpunkt der Kontaktierung und damit der Zeitpunkt des Aufsetzens der Kartusche und/oder der Betriebszeitraum. Dabei besteht zum einen die Möglichkeit, dass das Codierungsmittel lediglich unidirektional auslesbar ist, d. h. es werden lediglich Informationen aus dem Codierungsmittel von der Steuereinrichtung ausgelesen. Optional besteht die Möglichkeit, einer bidirektionalen Kommunikation bzw. bidirektionalen Übertragung von Informationen, indem z. B. ein Speicher des Codierungsmittels von der Steuereinrichtung beschreibbar ist.

Die Fördereinheit kann in grundsätzlich bekannter Weise ein Gehäuse aufweisen, in welchem zumindest ein Antrieb zum Fördern des Schmierstoffs und die mit dem Antrieb verbundene Steuereinrichtung angeordnet sind und welche eine dem Vorratsbehälter zugewandte Stirnwand mit einer Einlassöffnung aufweist. Der Vorratsbehälter weist wiederum eine der Fördereinheit zugewandte Behälterbasis mit einer Entnahmeöffnung auf. Ein solcher Vorratsbehälter wird in grundsätzlich bekannter Weise an die Fördereinheit angeschlossen und im Zuge des Anschlusses der Fördereinheit an den Vorratsbehälter wird die Entnahmeöffnung mit der Einlassöffnung verbunden. Erfindungsgemäß ist nun vorgesehen, dass im Zuge des Anschlusses der Fördereinheit an einen Vorratsbehälter (oder umgekehrt) nicht nur die Entnahmeöffnung mit der Einlassöffnung verbunden wird, sondern zugleich auch das Codierungsmittel mit der Steuereinrichtung (informationstechnisch) verbunden bzw. kontaktiert wird. Die funktionelle Verbindung des Codierungsmittels mit der Steuereinrichtung zum Zwecke des Auslesens erfolgt folglich automatisch im Zuge der Montage des Vorratsbehälters an der Fördereinheit.

Besonders bevorzugt erfolgt die Kommunikationsverbindung zwischen Codierungsmittel und Steuereinrichtung über eine mechanische Verbindung, d. h. die Kommunikation zwischen Codierungsmittel und Steuereinrichtung erfolgt drahtgebunden und nicht drahtlos. Dieses führte zu einem sehr einfachen Aufbau und zu einer hohen Funktionssicherheit.

Konstruktiv lässt sich dieses z. B. dadurch realisieren, dass an der Behälterbasis eine erste (mechanische) Kontakteinrichtung und an der Stirnwand eine zweite (mechanische) Kontakteinrichtung angeordnet sind, welche im Zuge des Anschlusses der Fördereinheit an den Vorratsbehälter miteinander mechanisch verbunden werden und dabei zugleich elektrisch kontaktiert werden, wobei die erste Kontakteinrichtung mit dem Codierungsmittel (elektrisch) verbunden ist oder dieses Codierungsmittel bildet und wobei die zweite Kontakteinrichtung (elektrisch) mit der Steuereinrichtung verbunden ist.

Dazu kann die erste Kontakteinrichtung z. B. (mechanisch) in die zweite Kontakteinrichtung einsteckbar und dabei elektrisch kontaktierbar sein oder umgekehrt die zweite Kontakteinrichtung (mechanisch) in die erste Kontakteinrichtung einsteckbar und damit elektrisch kontaktierbar sein. Die erste Kontakteinrichtung und die zweite Kontakteinrichtung können folglich eine mechanische und elektrische Steckverbindung bilden. Das Codierungsmittel kann in die erste Kontakteinrichtung integriert sein oder von dieser ersten Kontakteinrichtung gebildet werden. So kann z. B. die erste Kontakteinrichtung als elektronische Platine ausgebildet sein, welche das Codierungsmittel aufweist oder das Codierungsmittel bildet. Dementsprechend kann die zweite Kontakteinrichtung als Platinenstecker ausgebildet sein, in welche die Platine als erste Kontakteinrichtung einsteckbar ist, wobei der Platinenstecker mit der Steuereinrichtung verbunden ist. Der Platinenstecker bildet folglich eine Aufnahme für die Platine, in welche die Platine einsteckbar ist. Damit wird insgesamt eine sehr einfache ausgestaltete Konstruktion realisiert, denn an der Kartusche muss lediglich eine Platine befestigt sein, die zugleich das Codierungsmittel bildet (und z. B. einen Speicher aufweist) und darüber hinaus auch zugleich die mechanische Steckverbindung realisiert, in dem sie in den Platinenstecker (z. B. Platinenrandstecker) einsteckbar ist.

Um ein einfach aufgebautes Codierungsmittel, z. B. die Platine, einfach an dem Behälter zu befestigen, kann der Behälter, z. B. die Behälterbasis, außenseitig mit einer mechanischen Halteeinrichtung versehen sein, in der das Codierungsmittel, z. B. die Platine, mechanisch gehalten ist. Eine solche Halteeinrichtung kann z. B. einstückig an der Behälterbasis angeordnet, z. B. an diese angeformt bzw. aus dieser ausgeformt sein.

Alternativ zu den beschriebenen Ausführungsformen, bei denen die Kommunikationsverbindung zwischen Codierungsmittel und Steuereinrichtung über eine drahtgebundene bzw. leitungsgebundene Verbindung erfolgt, können auch drahtlose Kommunikationsverbindungen zwischen Codierungsmittel und Steuereinrichtung realisiert werden. Dazu kommen beispielsweise Verbindungen bzw. Identifizierungen mit Hilfe elektromagnetischer Wellen in Frage, z. B. durch RFID-Technologie. So kann z. B. der Vorratsbehälter mit einem Codierungsmittel bzw. Identifizierungsmittel in Form eines RFID-Transponders ausgerüstet sein. Die Fördereinheit, insbesondere deren elektronische Steuereinrichtung, kann mit einer entsprechenden Leseeinrichtung für einen solchen RFID-Transponder ausgerüstet oder verbunden sein. Mit einer solchen drahtlosen Technik lässt sich der erfindungsgemäße Gedanke der Identifizierung des Vorratsbehälters im montierten Zustand ebenfalls realisieren. Dabei kann auf die grundsätzlich bekannten Eigenschaften der RFID-Technologie zurückgegriffen werden, insbesondere auf die üblicherweise verwendeten Frequenzbereiche. Der am Vorratsbehälter angeordnete RFID-Transponder weist bevorzugt zumindest einen Mikrochip und eine Antenne auf. Der Transponder kann als aktiver Transponder mit Energiequelle oder als passiver Transponder ohne eigene Energiequelle ausgebildet sein. Der RFID-Transponder ist bevorzugt nicht nur auslesbar, sondern auch beschreibbar, so dass er mit den relevanten Informationen, insbesondere zur Identifizierung der Kartusche, beschrieben werden kann.

Grundsätzlich betrifft die Erfindung einen Schmierstoffspender in bekannter Bauweise mit einem starren, becherartigen Vorratsbehälter, in welchem ein (z. B. mit einer Gewindespindel verbundener) Kolben angeordnet ist, über den der Schmierstoff aus dem Vorratsbehälter verdrängt wird (vgl. z. B. DE 102 34 881 B4).

Alternativ ist der Vorratsbehälter jedoch als im Zuge der Entleerung (selbständig) kollabierender Behälter ausgebildet bzw. der Vorratsbehälter weist einen solchen kollabierenden Innenbehälter auf. Das bedeutet, dass im Zuge der Entleerung des Behälters dieser aufgrund des innerhalb des Behälters erzeugten Unterdrucks selbständig kollabiert und die (obere) Behälterdecke in Richtung zur Fördereinheit gesaugt wird. Damit wird ein Vorratsbehälter mit deutlich reduziertem Abfall zur Verfügung gestellt. Denn als Abfallprodukt verbleibt nicht ein Behälter mit ursprünglichem Behältervolumen sondern lediglich der kollabierte Behälter mit deutlich reduziertem Abfallvolumen so dass die Entsorgung vereinfacht wird. Besonders bevorzugt ist zusätzlich zu dem kollabierenden Vorratsbehälter eine starre, nicht kollabierende Schutzkappe vorgesehen, so dass der gefüllte Vorratsbehälter im montierten Zustand innerhalb dieser Schutzkappe angeordnet ist. Optional lässt sich der Vorratsbehälter mit Hilfe dieser Schutzkappe an der Fördereinheit bzw. deren Gehäuse fixieren. Die Schutzkappe selbst kann dabei wiederverwendet werden, während der Vorratsbehälter als kollabierender Innenbehälter austauschbar ist und folglich ein Wegwerfprodukt mit minimalem Restvolumen bildet.

In einer ersten Ausführungsform ist der Vorratsbehälter (oder dessen Innbehälter) als Faltenbalg mit einem ziehharmonikaartigen Behältermantel ausgebildet. Solche Vorratsbehälter als Faltenbalg sind im Zusammenhang mit Schmierstoffspendern grundsätzlich bekannt. Sie können bevorzugt mit einer selbstansaugenden Pumpe ohne zusätzliche Federbeaufschlagung realisiert werden. Ein solcher Faltenbalg kann parallel zueinander verlaufende Falten oder alternativ auch spiralförmig ausgebildete Falten aufweisen.

In einer zweiten Ausführungsform ist der Vorratsbehälter (oder dessen Innenbehälter) becherartig als kollabierender Becher mit einem dünnwandigen, flexiblen zylindrischen Bechermantel ausgebildet, ähnlich wie es z. B. bei herkömmlichen Einweg-Trinkbechern bekannt ist. Im Zuge der Entleerung wird der Behälter- bzw. die Becherdecke in Richtung zur Fördereinheit gesaugt und dabei faltet sich der dünnwandige Bechermantel zusammen, so dass - ähnlich wie bei einem Faltenbalg - ein Abfallprodukt mit minimalen Restvolumen verbleibt. Gegenüber einer Lösung mit Faltenbalg hat die Lösung mit kollabierendem Becher darüber hinaus den Vorteil, dass eine optimale Restentleerung erfolgen kann, da keine Restmengen innerhalb der Falten eines Faltenbalges verbleiben können.

Bei beiden Ausführungsformen besteht die Möglichkeit, dass der (faltbare, kollabierende) Bechermantel bzw. Behältermantel mit einem starren Basisbauteil verbunden ist, welches die Behälterbasis aufweist oder die Behälterbasis bildet. Der kollabierende Behälter wird folglich mit dieser starren Behälterbasis auf die Fördereinheit aufgesetzt und dabei das Codierungsmittel mit der Steuereinrichtung in der beschriebenen Weise kontaktiert. Die bereits erwähnte Halteeinrichtung für das Codierungsmittel kann z. B. einstückig mit diesem starren Basisbauteil ausgebildet sein.

Im Falle eines kollabierenden Vorratsbehälters, weist dieser eine obere, stirnseitige Behälterdecke auf, die im Zuge der Entleerung des kollabierenden Behälters gegen die Behälterbasis und damit auch gegen die Fördereinheit abgesenkt wird. Bei einer solchen Ausführungsform ist nach einem weiteren Vorschlag der Erfindung mit selbständiger Bedeutung vorgesehen, dass in oder an der Fördereinheit eine Sensoreinrichtung angeordnet ist, welche zur Leerstandserkennung des Behälters eine Annäherung der Behälterdecke an die Behälterbasis detektiert. Dazu kann an der Behälterdeck, z. B. auf deren Außenseite, ein detektierbaren Label angeordnet sein, wobei dieses detektierbare Label von der Sensoreinrichtung detektierbar ist, sobald sich das Label und damit auch die Behälterdecke in einem zuvor vorgesehenen hinterlegten Maß an den Sensor und damit auch an die Fördereinheit angenähert hat. Bei dem detektierbaren Label kann es sich z. B. um ein Label aus einem metallischen und/oder ferromagnetischen Werkstoff handeln. Die Sensoreinrichtung ist dementsprechend angepasst, indem sie z. B. die Annäherung eines metallischen und/oder eines magnetischen Werkstoffs detektiert. Technisch kann es sich dabei z. B. um eine Sensoreinrichtung mit einem Hallsensor handeln.

Die Erfindung betrifft nicht nur den beschriebenen Schmierstoffspender, sondern auch einen Vorratsbehälter mit dem beschriebenen elektronischen Codierungsmittel einerseits sowie außerdem eine Fördereinheit, mit der dieses elektronische Codierungsmittel auslesbar ist. Der erfindungsgemäße Verratsbehälter einerseits und die erfindungsgemäße Fördereinheit andererseits werden folglich auch jeweils selbständig unter Schutz gestellt.

Außerdem betrifft die Erfindung ein Verfahren zum Betrieb eines Schmierstoffspenders der beschriebenen Art. In diesem Verfahren kann auf die im Zusammenhang mit dem Schmierstoffspender zurückgegriffenen Verfahrensschritte und Funktionsweisen zurückgegriffen werden.

Im Folgenden wird die Erfindung anhand von lediglich Ausführungsbeispiele darstellenden Zeichnungen näher erläutert. Es zeigen:
- Fig. 1: einen Schmierstoffspender in einer (aufgebrochenen) perspektivischen Darstellung,
- Fig. 2: einen vergrößerten Ausschnitt aus der Fig. 1.,
- Fig. 3: einen Vorratsbehälter des Schmierstoffspenders nach Fig. 1,
- Fig. 4: den Gegenstand nach Fig. 3 in einer abgewandelten Ausführungsform,
- Fig.5: eine optionale Ausgestaltung des Schmierstoffspenders nach Fig. 1.

In den Figuren ist ein Schmierstoffspender und folglich eine Vorrichtung zur Abgabe eines Schmierstoffs dargestellt, wobei ein solcher Schmierstoffspender in seinem grundsätzlichen Aufbau einerseits einen Vorratsbehälter 1 und andererseits eine Fördereinheit 2 aufweist, die auch als Antriebseinheit oder Antriebskopf bezeichnet werden kann und die bevorzugt als Pumpe ausgebildet ist. Der mit Schmierstoff gefüllte Vorratsbehälter 1 ist lösbar an die Fördereinheit 2 angeschlossen bzw. anschließbar. Vorratsbehälter und Fördereinheit 2 sind lösbar und folglich austauschbar (modulartig) zu einer Baueinheit zusammensetzbar bzw. zusammengesetzt. Mit der Fördereinheit 2 ist der Schmierstoff aus dem Vorratsbehälter 1 zu einem lediglich angedeuteten Auslass 5 der Fördereinheit 2 förderbar. Ein solcher Schmierstoffspender lässt sich an eine dafür vorgesehene Schmierstelle (z. B. im Bereich eines Lagers einer Maschine oder dergleichen) anschließen. Die Fördereinheit 2 kann dazu mit einer nicht dargestellten Pumpeneinrichtung ausgerüstet sein, die z. B. einen zyklisch hin- und her-bewegbaren Kolben aufweist, der mit Hilfe eines in der Fördereinheit 2 angeordneten (nicht dargestellten Antriebes) hin- und herbewegbar und dabei Schmiermittel aus dem Vorratsbehälter 1 zum Auslass 5 der Fördereinheit 2 förderbar ist. Einzelheiten zu Aufbau und Funktionsweise der Fördereinheit 2 bzw. der darin angeordneten Pumpe sind in den Figuren nicht dargestellt. Verschiedene Varianten sind aus dem Stand der Technik bekannt.

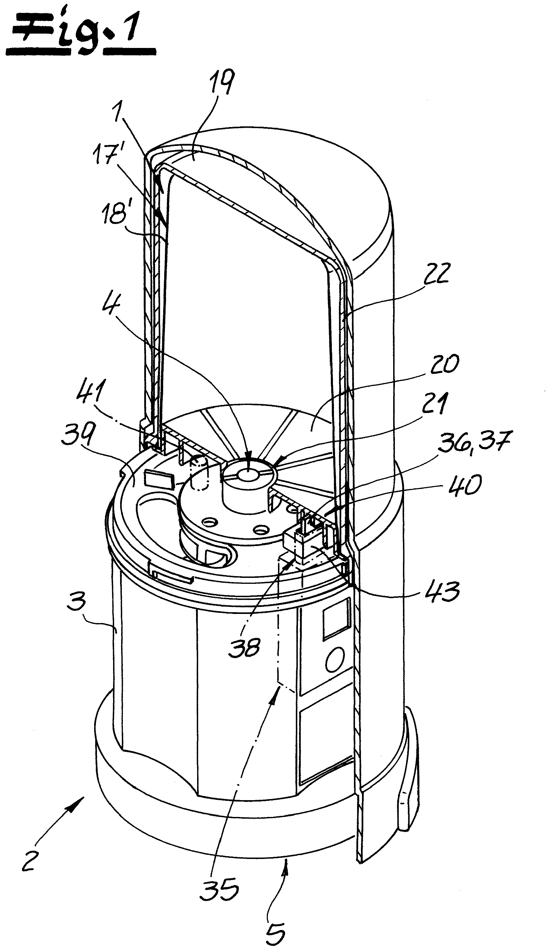

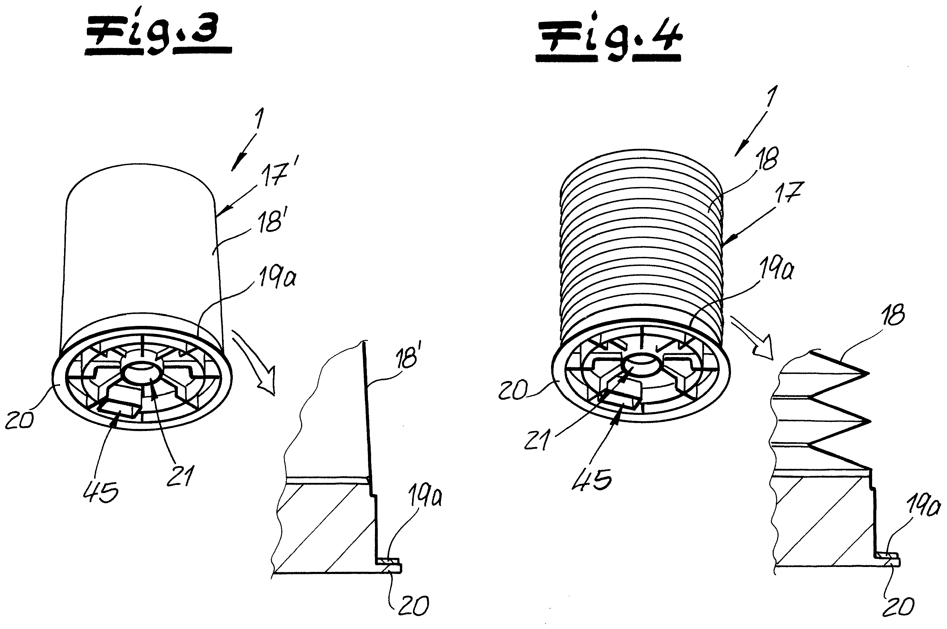

Mögliche Ausführungsformen des in Fig. 1 dargestellten und an die Fördereinheit 2 angeschlossenen Vorratsbehälters 1 sind in den Fig. 3 und 4 dargestellt. Ein solcher Vorratsbehälter 1 ist in seinem grundsätzlichen Aufbau becherartig ausgebildet und weist eine der Fördereinheit 2 zugewandte Behälterbasis 20 mit einer Entnahmeöffnung 21 auf. Der Vorratsbehälter 1 wird mit dieser Behälterbasis 20 auf die Fördereinheit, nämlich auf deren obere Stirnwand 39 aufgesetzt, wobei diese obere Stirnwand 39 eine Einlassöffnung 4 aufweist, so dass die Entnahmeöffnung 21 des Vorratsbehälters 1 mit der Einlassöffnung 4 der Fördereinheit 2 verbunden wird. In Fig. 1 ist erkennbar, dass der Vorratsbehälter 1 mit Hilfe einer Schutzkappe 22 an der Fördereinheit 2 fixiert wird, z. B. über eine Schraubverbindung oder eine Bajonettverbindung, und zwar üblicherweise unter Zwischenschaltung von Dichtungen. Diese Ausgestaltung mit der Schutzkappe 22 wird besonders bevorzugt bei einem Vorratsbehälter 1 eingesetzt, der als kollabierender Vorratsbehälter ausgebildet ist. Darauf wird im Zusammenhang mit den Fig. 3 und 4 noch eingegangen. Die Erfindung umfasst aber ebenso Ausführungsformen, bei denen der Vorratsbehälter 1 selbst einen tragenden und folglich starren Behältermantel aufweist und bei dem üblicherweise auf eine zusätzliche Schutzkappe verzichtet werden kann. Die Fixierung erfolgt in diesem Fall unmittelbar im Zuge des Aufsetzens des Vorratsbehälters 1 auf die Fördereinheit 2 oder mit separaten Fixierungsmitteln.

Die Fördereinheit 2 weist ein Gehäuse 3 auf, in dem zumindest der bereits erwähnte Antrieb zum Fördern des Schmierstoffs und die mit dem Antrieb verbundene Steuereinrichtung 35 angeordnet sind, wobei diese Steuereinrichtung 35 lediglich angedeutet ist. Die Steuereinrichtung dient der Steuerung der Fördereinheit, z. B. über den Antrieb, so dass über die Steuereinrichtung z. B. bestimmte Parameter des Schmierstoffspenders wie z. B. Spendeintervalle, Spendezeiträume oder dergleichen einstellbar sind. Erfindungsgemäß ist der Vorratsbehälter 1 mit einem elektronischen Codierungsmittel 36 ausgerüstet, welches zur Identifizierung des Vorratsbehälters 1 im montierten Zustand mit der elektronischen Steuereinrichtung 35 der Fördereinheit 2 zur Übertragung von Informationen verbindbar und von dieser auslesbar ist. Dabei ist vorgesehen, dass im Zuge des Anschlusses der Fördereinheit 2 an den Vorratsbehälter 1 einerseits die Entnahmeöffnung 21 in der Behälterbasis 20 mit der Einlassöffnung 4 in der Stirnwand 39 verbunden wird und dabei zugleich andererseits das Codierungsmittel 36 mit der Steuereinrichtung 35 verbunden und (elektrisch) kontaktiert wird. Das Codierungsmittel 36 kann z. B. eine Kennung der Kartusche enthalten bzw. eine solche Kennung kann in dem Codierungsmittel 36 gespeichert sein. Im Zuge des Auslesens des Codierungsmittels 36 kann die Steuereinrichtung 35 der Fördereinheit 2 z. B. überprüfen, ob die in dem Codierungsmittel 36 hinterlegte Kennung mit der oder mit den in der Steuereinheit als zulässig gespeicherten Kennungen übereinstimmt und ob es sich folglich um eine für die Fördereinheit geeignete oder zugelassene Kartusche handelt. Optional besteht die Möglichkeit, dass in dem Speicher des Codierungsmittels 36 weitere Informationen über den Vorratsbehälter, z. B. in dem Behältertyp und/oder die Behältergröße und/oder den Schmierstoff und/oder die entnommene Schmierstoffmenge und/oder den Füllstand oder das Restvolumen und/oder zeitliche Informationen gespeichert sind. Bei solchen zeitlichen Informationen kann es sich z. B. um den Zeitpunkt des Aufsetzens der Kartusche auf die Fördereinheit handeln.

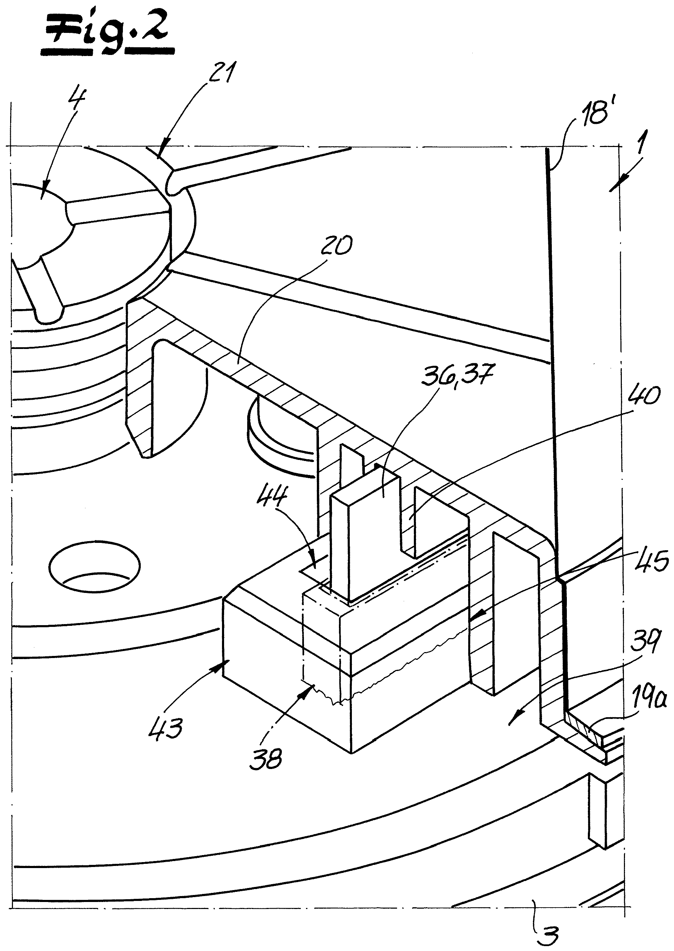

In den Fig. 1 und 2 ist erkennbar, dass an der Behälterbasis 20 eine erste Kontakteinrichtung 37 und an der Stirnwand 39 eine zweite Kontakteinrichtung 38 angeordnet sind, welche im Zuge des Anschlusses der Fördereinheit an einen Vorratsbehälter miteinander mechanisch verbunden und dabei elektrisch kontaktiert werden. Die erste Kontakteinrichtung 37 bildet dabei das Codierungsmittel 36, das in diesem Fall als Platine ausgebildet ist. Die zweite Kontakteinrichtung 38 ist elektrisch mit der Steuereinrichtung 35 verbunden. Diese Verbindung ist nicht dargestellt. In dem dargestellten Ausführungsbeispiel ist die erste Kontakteinrichtung 37 nämlich die Platine, in die zweite Kontakteinrichtung 38 einsteckbar und dabei elektrisch kontaktierbar. Die zweite Kontakteinrichtung 38 ist als Platinenstecker bzw. Platinenrandstecker ausgebildet, in welche die Platine als erste Kontakteinrichtung 37 eingesteckt wird. Die Behälterbasis 20 ist außenseitig mit einer mechanischen Halteeinrichtung 40 versehen, in der das Codierungsmittel 36 bzw. die Platine 37 als erste Kontakteinrichtung mechanisch gehalten ist. Die zweite Kontakteinrichtung 38, die z. B. als Platinenrandstecker ausgebildet sein kann, ist bei der dargestellten Ausführungsform auf der Stirnwand 39 geschützt innerhalb eines Schutzgehäuses oder eines Schutzkastens 43 angeordnet, wobei dieser Schutzkasten 43 außenseitig auf die Stirnwand 39 aufgesetzt und fest mit dieser verbunden ist. Der Schutzkasten 43 weist eine dem Behälter 1 zugewandte Öffnung 44 auf, durch welche die Platine 37 bzw. das Codierungsmittel 36 in den Schutzkasten und in den darin angeordneten Stecker einsteckbar ist. In Fig. 2 ist im Übrigen erkennbar, dass die Behälterbasis 20 im Bereich der Halteeinrichtung 40 mit einer Aufnahmekammer 45 versehen ist, in welcher die Platine angeordnet ist, und in welche der Kasten 43 der Fördereinheit 2 im Zuge des Zusammensteckens eingreift.

Bei dem Vorratsbehälter 1 kann es sich z. B. um einen kollabierenden Behälter handeln, der mit Hilfe der Fördereinheit ohne separate Kraftbeaufschlagung des Behälters durch Pumpenwirkung entleert wird und im Zuge des Entleerens selbständig kollabiert. Dazu kann der Behälter 1 z. B. als becherartiger Behälter bzw. als kollabierender Becher 17` ausgebildet sein, der einen dünnwandigen Behältermantel 18' aufweist. Dieser kollabierende Becher 17' kann mit dem dünnwandigen, zylindrischen Behältermantel 18` wiederum mit einem Kragen 19a mit dem starren Basisbauteil 20 verbunden sein, z. B. über eine Schweißverbindung oder auch eine Klebeverbindung. Im Zuge der Entleerung faltet sich dieser dünnwandige Becher 17` bzw. dessen Behältermantel 18` zusammen, so dass ein Abfallprodukt mit minimalen Restvolumen verbleibt. Bei dem in Fig. 1 dargestellten Vorratsbehälters 1 kann es sich z. B. um den in Fig. 3 dargestellten Vorratsbehälter mit kollabierendem Becher 17` handeln.

Fig. 4 zeigt eine alternative Ausgestaltung eines Vorratsbehälters 1 mit Faltenbalg 17. Dieser Faltenbalg 17 weist eine ziehharmonikaartige Seitenwand 18 und einen umlaufenden Kragen 19a auf, mit dem der Faltenbalg 17 mit dem starren Basisbauteil 20 verbunden ist. Auch dieser Behältertyp kollabiert im Zuge der Entleerung, so dass ein Abfallprodukt mit minimalen Restvolumen verbleibt.

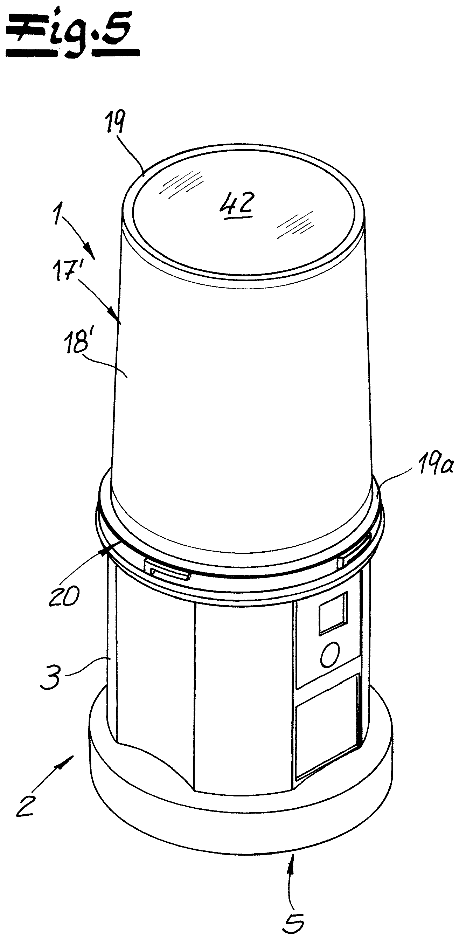

Der Vorratsbehälter 1 weist - unabhängig von der Ausführungsform - bevorzugt eine obere, stirnseitig Behälterdecke 19 auf, die im Zuge der Entleerung z. B. gegen die Behälterbasis 20 und die Fördereinheit 2 abgesenkt wird. In Fig. 5 ist optional eine Ausführungsform eines Schmierstoffspenders dargestellt. Beispielhaft ist wiederum ein kollabierender Vorratsbehälter 1, z. B. in der Ausführungsform als kollabierender Becher dargestellt, jedoch in dieser Darstellung ohne aufgesetzte Schutzkappe. Es ist erkennbar, dass an der Behälterdecke 19, z. B. auf deren Außenseite, ein detektierbares Label 42 angeordnet ist, dass z. B. aus einem metallischen und/oder einem ferromagnetischen Werkstoff ausgebildet ist. In Fig. 1 ist erkennbar, dass optional an der Fördereinheit eine Sensoreinrichtung 41 angeordnet sein kann, welche zur Leerstandserkennung eine Annäherung der Behälterdecke 19 an die Behälterbasis 2 detektiert, in dem das detektierbare Label 42 von dieser Sensoreinrichtung 41 detektierbar ist. Auf diese Weise lässt sich sehr einfach und zuverlässig eine Leerstandskontrolle realisieren. Die Sensoreinrichtung kann mit der Steuereinrichtung 35 verbunden sein, so dass die Steuereinrichtung eine Information über einen Leerstand erzeugen bzw. abgeben kann, z. B. an eine optische oder akustische Anzeigeeinrichtung.

Die in den Figuren dargestellten Ausführungsformen sind beispielhaft so ausgestaltet, dass das elektronische Codierungsmittel 36 im Zuge der Montage des Vorratsbehälters 1 bei der mechanischen Verbindung auch zugleich elektronisch bzw. kommunikationstechnisch verbunden wird, und zwar kabelgebunden bzw. leitungsgebunden über die beschriebenen Steckverbindungen. Die Erfindung umfasst alternativ aber auch solche Ausführungsformen, bei denen im Zuge der mechanischen Verbindung des Vorratsbehälters 1 mit der Fördereinheit 2 eine drahtlose Kommunikationsverbindung zwischen Codierungsmittel 36 und Steuereinrichtung 35 hergestellt wird. Dabei kann z. B. auf eine Funkverbindung zurückgegriffen werden, vorzugsweise im Radiofrequenzbereich. Es kann z. B. die grundsätzlich bekannte RFID-Technik zum Einsatz kommen, indem der Vorratsbehälter 1 mit einem Codierungsmittel 36 in Form eines RFID-Transponders ausgerüstet wird. Die Fördereinheit 2 bzw. deren Steuereinrichtungen 35 kann mit einer entsprechenden Leseeinheit oder eine Lese- und Schreibeinheit für dieses RFID-Transponder ausgerüstet sein. Eine solche Ausführungsform ist in den Figuren nicht dargestellt.

## Patentansprüche

1. Schmierstoffspender, mit einem mit Schmierstoff gefüllten Vorratsbehälter (1) und einer an den Vorratsbehälter lösbar angeschlossen oder anschließbaren Fördereinheit (2), mit der Schmierstoff aus dem Vorratsbehälter (1) zu einem Auslass (5) der Fördereinheit (2) förderbar ist und die mit einer elektronischen Steuereinrichtung (35) ausgerüstet ist,
wobei die Fördereinheit (2) ein Gehäuse (3) aufweist, in dem zumindest ein Antrieb zum Fördern des Schmierstoffs und die mit dem Antrieb verbundene Steuereinrichtung (35) angeordnet sind und welches eine dem Vorratsbehälter (1) zugewandte Stirnwand (39) mit einer Einlassöffnung (4) aufweist,
wobei der Vorratsbehälter (1) eine der Fördereinheit (2) zugewandte Behälterbasis (20) mit einer Entnahmeöffnung (21) aufweist,
**dadurch gekennzeichnet, dass** der Vorratsbehälter (1) mit einem elektronischen Codierungsmittel (36) ausgerüstet ist, welches zur Identifizierung des Vorratsbehälters (1) im montierten Zustand mit der elektronischen Steuereinrichtung (35) der Fördereinheit (2) zur Übertragung von Informationen verbindbar und von dieser auslesbar ist und
dass im Zuge des Anschlusses der Fördereinheit (2) an den Vorratsbehälter (1) einerseits die Entnahmeöffnung (21) mit der Einlassöffnung (4) und zugleich andererseits das Codierungsmittel (36) mit der Steuereinrichtung (35) verbindbar ist.

2. Schmierstoffspender nach Anspruch 1, **dadurch gekennzeichnet, dass** an der Behälterbasis (20) eine erste Kontakteinrichtung (37) und an der Stirnwand (39) eine zweite Kontakteinrichtung (38) angeordnet sind, welche im Zuge des Anschlusses der Fördereinheit (2) an den Vorratsbehälter (1) miteinander mechanisch verbindbar und dabei elektrisch kontaktierbar sind, wobei die erste Kontakteinrichtung (37) mit dem Codierungsmittel (36) verbunden ist oder dieses Codierungsmittel (36) bildet und wobei die zweite Kontakteinrichtung (38) mit der Steuereinrichtung (35) verbunden ist.

3. Schmierstoffspender nach Anspruch 2, **dadurch gekennzeichnet, dass** die erste Kontakteinrichtung (37) in die zweite Kontakteinrichtung (38) einsteckbar und dabei elektrisch kontaktierbar ist oder dass umgekehrt die zweite Kontakteinrichtung (38) in die erste Kontakteinrichtung (37) einsteckbar und dabei elektrisch kontaktierbar ist.

4. Schmierstoffspender nach Anspruch 2 oder 3, **dadurch gekennzeichnet, dass** das Codierungsmittel (36) in die erste Kontakteinrichtung (37) integriert ist oder von dieser ersten Kontakteinrichtung (37) gebildet wird.

5. Schmierstoffspender nach Anspruch 4, **dadurch gekennzeichnet, dass** die erste Kontakteinrichtung (37) als elektronische Platine ausgebildet ist, welche das Codierungsmittel (36) aufweist oder bildet.

6. Schmierstoffspender nach Anspruch 5, **dadurch gekennzeichnet, dass** die zweite Kontakteinrichtung (38) als Platinenstecker ausgebildet ist, in welchen die Platine als erste Kontakteinrichtung (37) einsteckbar ist, wobei der Platinenstecker mit der Steuereinrichtung (35) verbunden ist.

7. Schmierstoffspender nach Anspruch 1, **dadurch gekennzeichnet, dass** das elektronische Codierungsmittel (36) drahtlos mit der elektronischen Steuereinrichtung (35) verbindbar und drahtlos von dieser auslesbar ist.

8. Schmierstoffspender nach Anspruch 7, **dadurch gekennzeichnet, dass** das Codierungsmittel (36) einen RFID-Transponder aufweist oder als solcher ausgebildet ist und dass die Fördereinheit (2) oder deren Steuereinrichtung (35) mit einer RFID-Leseeinheit ausgerüstet oder verbunden ist.

9. Schmierstoffspender nach einem der Ansprüche 1 bis 8, **dadurch gekennzeichnet, dass** das Codierungsmittel (36), z. B. die Platine, einen Speicher aufweist, in dem Informationen über den Vorratsbehälter (1), z. B. über den Behältertyp und/oder die Behältergröße und/oder den Schmierstoff und/oder die entnommene Schmierstoffmenge und/oder den Füllstand oder das Restvolumen und/oder zeitliche Informationen gespeichert oder speicherbar sind.

10. Schmierstoffspender nach einem der Ansprüche 1 bis 9, **dadurch gekennzeichnet, dass** die Behälterbasis (20) außenseitig mit einer mechanischen Halteeinrichtung (40) versehen ist, in der das Codierungsmittel (36), z. B. die Platine, mechanisch gehalten ist.

11. Schmierstoffspender nach einem der Ansprüche 1 bis 10, **dadurch gekennzeichnet, dass** das Codierungsmittel (36) mit der Steuereinrichtung (35) der Fördereinheit (2) auslesbar und zusätzlich mit Informationen beschreibbar ist.

12. Schmierstoffspender nach einem der Ansprüche 1 bis 11 **dadurch gekennzeichnet, dass** der Vorratsbehälter (1) als kollabierender Behälter ausgebildet ist oder einen kollabierenden Innenbehälter aufweist, welcher einen zylindrischen, flexiblen Bechermantel (18') oder eine als Faltenbalg (17) ausgebildeten ziehharmonikaartige Seitenwand (18) aufweist, wobei der Bechermantel bzw. Behältermantel mit einem starren Basisbauteil verbunden ist, welches die Behälterbasis aufweist oder die Behälterbasis (20) bildet, wobei bevorzugt die Halteeinrichtung (40) für das Codierungsmittel (36) einstückig mit dem starren Basisbauteil (20) ausgebildet ist.

13. Schmierstoffspender nach einem der Ansprüche 1 bis 11, **dadurch gekennzeichnet, dass** der Vorratsbehälter (1) eine obere, stirnseitige Behälterdecke (19) aufweist, die im Zuge der Entleerung des kollabierenden Behälters gegen die Behälterbasis (20) und die Fördereinheit (2) abgesenkt wird,
wobei in oder an der Fördereinheit (2) eine Sensoreinrichtung (41) angeordnet ist, welche zur Leerstandserkennung eine Annäherung der Behälterdecke (19) an die Behälterbasis (20) detektiert.

14. Schmierstoffspender nach Anspruch 13, **dadurch gekennzeichnet, dass** an der Behälterdecke (19), z. B. auf deren Außenseite, ein detektierbares Label (42), z. B. aus einem metallischen oder einem ferromagnetischen Werkstoff, angeordnet ist, wobei das Label (42) von der Sensoreinrichtung (41) detektierbar ist.

15. Vorratsbehälter (1) für einen Schmierstoffspender nach einem der Ansprüche 1 bis 14, **dadurch gekennzeichnet, dass** der Vorratsbehälter (1) mit einem elektronischen Codierungsmittel (36) ausgerüstet ist, welches zur Identifizierung des Vorratsbehälters (1) im montierten Zustand mit der elektronischen Steuereinrichtung (35) der Fördereinheit (2) zur Übertragung von Informationen verbindbar und von dieser auslesbar ist.

16. Fördereinheit (2) für einen Schmierstoffspender nach einem der Ansprüche 1 bis 15, **dadurch gekennzeichnet, dass** die elektronische Steuereinrichtung (35) der Fördereinrichtung mit einem elektronischen Codierungsmittel (36) eines Vorratsbehälters (1) im montierten Zustand zur Übertragung von Informationen derart verbindbar ist, dass das Codierungsmittel (36) von der Steuereinrichtung (35) auslesbar ist.

17. Verfahren zum Betrieb eines Schmierstoffspenders nach einem der Ansprüche 1 bis 16, **dadurch gekennzeichnet, dass** das elektronische Codierungsmittel (36) zur Identifizierung des Vorratsbehälter (1) im Zuge des Anschlusses des Vorratsbehälters (1) an die Fördereinheit (2) mit der elektronischen Steuereinrichtung (35) der Fördereinheit (2) verbunden und ausgelesen wird.

18. Verfahren nach Anspruch 17, **dadurch gekennzeichnet, dass** die elektronische Steuereinrichtung (35) eine in dem elektronischen Codierungsmittel (36) gespeicherte Kennung des Vorratsbehälters (1) ausliest und mit in der Steuereinrichtung (35) gespeicherten Kennungen vergleicht, wobei bevorzugt die Fördereinheit (2) oder deren Antrieb deaktiviert oder gestoppt wird, sofern keine Übereinstimmung der Kennungen ermittelt wird.

## Claims

1. A lubricant dispenser comprising a reservoir container (1) filled with lubricant and a conveying unit (2) which is detachably connected, or connectable, to the reservoir container, with which lubricant can be conveyed from the reservoir container (1) to an outlet (5) of the conveying unit (2), and which is equipped with an electronic control device (35),
wherein the conveying unit (2) comprises a housing (3) in which at least one drive for conveying the lubricant, and the control device (35) connected to the drive, are arranged, and which has a front wall (39) facing the reservoir container (1) with an inlet opening (4),
wherein the reservoir container (1) comprises a container base (20) facing the conveying unit (2) with a withdrawal opening (21),
**characterized in that** the reservoir container (1) is equipped with an electronic coding means (36) which is connectable to, and readable by, the electronic control device (35) of the conveying unit (2) for the transmission of information, for identification of the reservoir container (1) in the mounted state, and that
in the course of connecting the conveying unit (2) to the reservoir container (1), on the one hand the withdrawal opening (21) can be connected to the inlet opening (4) and, on the other hand, simultaneously, the coding means (36) can be connected to the control device (35).

2. The lubricant dispenser according to claim 1, **characterized in that** a first contact device (37) is arranged on the container base (20), and a second contact device (38) is arranged on the front wall (39), which contact devices can be mechanically connected to one another and thereby brought into electrical contact with one other, during the connection of the conveying unit (2) to the reservoir container (1), wherein the first contact device (37) is connected to the coding means (36), or forms said coding means (36), and wherein the second contact device (38) is connected to the control device (35).

3. The lubricant dispenser according to claim 2, **characterized in that** the first contact device (37) can be inserted into the second contact device (38) and thereby brought into electrical contact or, conversely, the second contact device (38) can be inserted into the first contact device (37) and thereby brought into electrical contact.

4. The lubricant dispenser according to claim 2 or 3, **characterized in that** the coding means (36) is integrated into the first contact device (37) or is formed by said first contact device (37).

5. The lubricant dispenser according to claim 4, **characterized in that** the first contact device (37) is designed as an electronic circuit board which comprises, or forms, the coding means (36).

6. The lubricant dispenser according to claim 5, **characterized in that** the second contact device (38) is designed as a circuit board plug, into which the circuit board can be inserted as the first contact device (37), wherein the circuit board plug is connected to the control device (35).

7. The lubricant dispenser according to claim 1, **characterized in that** the electronic coding means (36) can be wirelessly connected to the electronic control device (35) and can be wirelessly read by it.

8. The lubricant dispenser according to claim 7, **characterized in that** the coding means (36) has an RFID transponder or is designed as such, and that the conveying unit (2), or the control device (35) thereof, is equipped with, or connected to, an RFID reading unit.

9. The lubricant dispenser according to one of claims 1 to 8, **characterized in that** the coding means (36), e.g. the circuit board, has a memory in which information on the reservoir container (1), e.g. on the container type and/or the container size and/or the lubricant type and/or the amount of lubricant dispensed and/or the fill level or remaining volume and/or time-related information, is stored or can be stored.

10. The lubricant dispenser according to one of claims 1 to 9, **characterized in that** the container base (20) is provided on the outside with a mechanical holding device (40), in which the coding means (36), e.g. the circuit board, is mechanically held.

11. The lubricant dispenser according to one of claims 1 to 10, **characterized in that** the coding means (36) can be read out using the control device (35) of the conveying unit (2) and can also be written with information.

12. The lubricant dispenser according to one of claims 1 to 11, **characterized in that** the reservoir container (1) is designed as a collapsible container or has a collapsible inner container, which has a cylindrical, flexible cup shell (18') or an accordion-like side wall (18) designed as bellows (17), wherein the cup shell or container shell is connected to a rigid base component which comprises, or forms, the container base (20), wherein the holding device (40) for the coding means (36) is preferably integrally formed with the rigid base component (20).

13. The lubricant dispenser according to one of claims 1 to 11, **characterized in that** the reservoir container (1) has an upper front container cover (19) which is lowered towards the container base (20) and the conveying unit (2) during the emptying of the collapsible container,
wherein a sensor device (41) is arranged in, or on, the conveying unit (2), which detects when the container cover (19) is approaching the container base (20), in order to identify the empty state.

14. The lubricant dispenser according to claim 13, **characterized in that** a detectable label (42), e.g. made of a metallic or ferromagnetic material, is arranged on the container cover (19), e.g. on the outer side thereof, wherein the label (42) can be detected by the sensor device (41).

15. A reservoir container (1) for a lubricant dispenser according to one of claims 1 to 14, **characterized in that** the reservoir container (1) is equipped with an electronic coding means (36) which is connectable to, and readable by, the electronic control device (35) of the conveying unit (2) for the transmission of information, for identification of the reservoir container (1) in the mounted state.

16. A conveying unit (2) for a lubricant dispenser according to one of claims 1 to 15, **characterized in that** the electronic control device (35) of the conveying unit is connectable to an electronic coding means (36) of a reservoir container (1) in the mounted state for the transmission of information, in such a manner that the coding means (36) is readable by the control device (35).

17. A method for operating a lubricant dispenser according to one of claims 1 to 16, **characterized in that** the electronic coding means (36) is connected to, and read by, the electronic control device (35) of the conveying unit (2) for identification of the reservoir container (1) during the connection of the reservoir container (1) to the conveying unit (2).

18. The method according to claim 17, **characterized in that** the electronic control device (35) reads an identifier of the reservoir container (1) stored in the electronic coding means (36) and compares it with identifiers stored in the control device (35), wherein the conveying unit (2), or the drive thereof, is preferably deactivated or stopped if no match is established for the identifiers.

## Revendications

1. Distributeur de lubrifiant, pourvu d'un réservoir de réserve (1) rempli de lubrifiant et d'une unité de convoyage (2) raccordée ou raccordable de manière amovible sur le réservoir de réserve, à l'aide de laquelle du lubrifiant est susceptible d'être convoyé du réservoir de réserve (1) vers une sortie (5) de l'unité de convoyage (2) et qui est équipée d'un dispositif de commande (35) électronique,
l'unité de convoyage (2) comportant un carter (3) dans lequel sont placés au moins un entraînement pour le convoyage du lubrifiant et le dispositif de commande (35) relié avec l'entraînement et lequel comporte une paroi frontale (39) dotée d'un orifice d'entrée (4) qui fait face au réservoir de réserve (1),
le réservoir de réserve (1) comportant une base de réservoir (20) dotée d'un orifice de prélèvement (21) qui fait face à l'unité de convoyage (2),
**caractérisé en ce que** le réservoir de réserve (1) est équipé d'un moyen de codage (36) électronique, lequel pour l'identification du réservoir de réserve (1) lorsqu'il est monté est susceptible d'être relié avec le dispositif de commande (35) électronique de l'unité de convoyage (2), pour la transmission d'informations et peut être lu par celle-ci et
**en ce qu'**au cours du raccordement de l'unité de convoyage (2) sur le réservoir de réserve (1), d'une part l'orifice de prélèvement (21) est susceptible d'être relié avec l'orifice d'entrée (4) et simultanément, d'autre part, le moyen de codage (36) est susceptible d'être relié avec le dispositif de commande (35).

2. Distributeur de lubrifiant selon la revendication 1, **caractérisé en ce que** sur la base de réservoir (20) est placé un premier système de contact (37) et sur la paroi frontale (39) est placé un deuxième système de contact (38), lesquels, au cours du raccordement de l'unité de convoyage (2) sur le réservoir de réserve (1) sont susceptibles d'être reliés mécaniquement l'un à l'autre et à cet effet d'être électriquement contactés, le premier système de contact (37) étant relié avec le moyen de codage (36) ou constituant ledit moyen de codage (36) et le deuxième système de contact (38) étant relié avec le dispositif de commande (35).

3. Distributeur de lubrifiant selon la revendication 2, **caractérisé en ce que** le premier système de contact (37) est enfichable dans le deuxième système de contact (38) et est susceptible d'être électriquement contacté à cet effet ou **en ce qu'**inversement, le deuxième système de contact (38) est enfichable dans le premier système de contact (37) et est susceptible d'être électriquement contacté à cet effet.

4. Distributeur de lubrifiant selon la revendication 2 ou 3, **caractérisé en ce que** le moyen de codage (36) est intégré dans le premier système de contact (37) ou est constitué par ledit premier système de contact (37).

5. Distributeur de lubrifiant selon la revendication 4, **caractérisé en ce que** le premier système de contact (37) est conçu sous la forme d'une carte électronique, laquelle comporte ou constitue le moyen de codage (36) .

6. Distributeur de lubrifiant selon la revendication 5, **caractérisé en ce que** le deuxième système de contact (38) est conçu sous la forme d'un slot, dans lequel la carte est enfichable en tant que premier système de contact (37), le slot étant relié avec le dispositif de commande (35).

7. Distributeur de lubrifiant selon la revendication 1, **caractérisé en ce que** le moyen de codage (36) électronique est susceptible d'être relié sans fil avec le dispositif de commande (35) électronique et d'être lu sans fil par celui-ci.

8. Distributeur de lubrifiant selon la revendication 7, **caractérisé en ce que** le moyen de codage (36) comporte un transpondeur RFID ou est conçu en tant que tel et **en ce que** l'unité de convoyage (2) ou son dispositif de commande (35) est équipé(e) d'une unité de lecture RFID ou relié(e) avec celle-ci.

9. Distributeur de lubrifiant selon l'une quelconque des revendications 1 à 8, **caractérisé en ce que** le moyen de codage (36), par ex. la carte comporte une mémoire, dans laquelle sont mémorisées ou mémorisables des informations concernant le réservoir de réserve (1), concernant par ex. le type de réservoir et / ou la dimension du réservoir et / ou le lubrifiant et / ou la quantité de lubrifiant prélevée et / ou le niveau de remplissage et / ou le volume résiduel et / ou des informations temporelles.

10. Distributeur de lubrifiant selon l'une quelconque des revendications 1 à 9, **caractérisé en ce que** la base de réservoir (20) est munie sur sa face extérieure d'un dispositif de maintien (40) mécanique, dans lequel le moyen de codage (36), par ex. la carte est maintenu(e) mécaniquement.

11. Distributeur de lubrifiant selon l'une quelconque des revendications 1 à 10, **caractérisé en ce que** le moyen de codage (36) est susceptible d'être lu et additionnellement d'être écrit avec des informations par le dispositif de commande (35) de l'unité de convoyage (2).

12. Distributeur de lubrifiant selon l'une quelconque des revendications 1 à 11, **caractérisé en ce que** le réservoir de réserve (1) est conçu sous la forme d'un réservoir collapsable, ou comporte un réservoir interne collapsable, lequel comporte une enveloppe de gobelet (18') cylindrique souple ou une paroi latérale (18) en accordéon, conçue sous la forme d'un soufflet (17), l'enveloppe de gobelet ou l'enveloppe de réservoir étant reliée avec un élément de base rigide, lequel comporte la base de réservoir ou constitue la base de réservoir (20), de préférence le dispositif de maintien (40) pour le moyen de codage (36) état conçu en monobloc avec l'élément de base (20) rigide.

13. Distributeur de lubrifiant selon l'une quelconque des revendications 1 à 11, **caractérisé en ce que** le réservoir de réserve (1) comporte un dessus (19) de réservoir frontal supérieur, qui au fur et à mesure que le réservoir collapsable se vide, s'affaisse contre la base de réservoir (20) et l'unité de convoyage (2),
dans ou sur l'unité de convoyage (2) étant placé un dispositif de capteur (41), lequel pour reconnaître l'inoccupation, détecte une approche du dessus (19) de réservoir vers la base de réservoir (20).

14. Distributeur de lubrifiant selon la revendication 13, caractérisé en ce sur le dessus (19) de réservoir, par ex. sur sa face extérieure est placé un label (42) détectable, par ex. en une matière métallique ou ferromagnétique, le label (42) étant détectable par le dispositif de capteur (41).

15. Réservoir de réserve (1) destiné à un distributeur de lubrifiant selon l'une quelconque des revendications 1 à 14, **caractérisé en ce que** le réservoir de réserve (1) est équipé d'un moyen de codage (36) électronique, lequel pour identifier le réservoir de réserve (1) lorsqu'il est monté est susceptible d'être relié avec le dispositif de commande (35) de l'unité de convoyage (2) pour la transmission d'informations et d'être lu par celui-ci.

16. Unité de convoyage (2) pour un distributeur de lubrifiant selon l'une quelconque des revendications 1 à 15, **caractérisé en ce que** le dispositif de commande (35) électronique du système de convoyage est susceptible d'être relié avec un moyen de codage (36) électronique d'un réservoir de réserve (1) lorsqu'il et monté, pour transmettre des informations de telle sorte que le moyen de codage (36) soit susceptible d'être lu par le dispositif de commande (35).

17. Procédé opérationnel d'un distributeur de lubrifiants selon l'une quelconque des revendications 1 à 16, **caractérisé en ce que** pour identifier le réservoir de réserve (1), au cours du raccordement du réservoir de réserve (1) sur l'unité de convoyage (2), le moyen de codage (36) électronique est relié avec le dispositif de commande (35) électronique de l'unité de convoyage (2) et lu par celui-ci.

18. Procédé selon la revendication 17, **caractérisé en ce que** le dispositif de commande (35) électronique lit un identifiant du réservoir de réserve (1) mémorisé dans le moyen de codage (36) électronique et le compare avec des identifiants mémorisés dans le dispositif de commande (35), de préférence, l'unité de convoyage (2) ou son entraînement étant désactivé(e) ou stoppé(e), si aucune concordance entre les identifiants n'est déterminée.
